# EUROPEAN PATENT SPECIFICATION

(11) **EP 0 695 078 B1**
(45) Date of publication and mention of the grant of the patent: **11.10.2000**
(21) Application number: 95305054.9
(22) Date of filing: 20.07.1995
(51) Int. Cl.: H04N 1/40, G06K 15/12, B41J 2/47, G02B 26/10

(54) **Fast scan spot correction in a polygon raster output scanner**
Schnelle Abtastspotkorrektor in einem Rasterabtastpolygon
Correction rapide de spot de balayage pour un polygone à balayage de trame

(30) Priority: 29.07.1994 US 282379
(43) Date of publication of application: 31.01.1996
(73) Proprietor: XEROX CORPORATION, Rochester, New York 14644 (US)
(72) Inventor: Appel, James J., Rochester, NY 14618 (US); Lama, William L., Fairport, NY 14450 (US)
(74) Representative: Skone James, Robert Edmund

(56) References cited:
- EP-A- 0 494 645
- GB-A- 2 084 423
- US-A- 5 144 337
- US-A- 5 165 074

## Description

The present invention relates to a raster scanning system and, more particularly, to a scanning system having a tangentially offset overfilled polygon ROS and means for providing spot size correction.

Prior art printers utilizing a raster output scanner (ROS) typically also utilize a rotating polygon having flat reflective surfaces, or facets, in parallel with the axis of rotation of the polygon. Light beams are emitted from a light source such as a helium-neon laser or a diode laser. The light beams are directed through pre-polygon conditioning optics, modulated according to image input signals, and directed onto the facet surfaces of the rotating polygon. The beams are reflected through a post-polygon conditioning lens system and scanned across the full process width of a photosensitive image plane to form image-wise scan line exposures. In these prior art ROS systems, the pre-polygon conditioning optics are incorporated either in an underfilled facet design where the light beams directed against each polygon facet illuminate only a portion of the facet, or in an overfilled facet design where the light beams completely illuminate each facet and a small portion of adjacent facets. Comparing the two designs, in an overfilled design the facet size required to produce a given spot size at the image plane can be greatly reduced allowing many more facets to be accommodated on the same diameter polygon. This, in turn, permits the scan system to operate at a relatively low rotation rate permitting the use of less powerful (and less expensive) polygon motor and polygon motor drivers. This advantage is partially offset by two factors: low throughput efficiency and spot width variations in the width of the spots forming the scan line at the image plane. In order to tolerate the low efficiency (typically 10 to 15%), a higher-powered laser diode is usually required. According to the invention, the spot size variation is corrected by modifying a known non-uniformity smile correction circuitry applicable to both underfilled and overfilled designs. In either system, the beam spot size diameter in the direction of scan changes from the start of scan (SOS) position to the end of scan (EOS) position due to the change in the apparent width of the facet exposed to the light beam. Stated alternatively, as the polygon rotates, and since the facet defines the limiting aperture in the fast scan direction, the width of the spot at a scan line at the photoreceptor plane is dependent on the apparent width of the facet. The variation in the spot size diameter in the fast scan direction can be as large as 20%. Such variation makes the tangentially offset overfilled design unacceptable for high quality ROS systems. The scanning beam exhibits an inherent beam intensity variation manifested by a decrease in illumination intensity at both ends of the scan (a condition conventionally referred to as "frown"). Frown is not the only cause of intensity non-uniformities in the output print. Other possible sources of non-uniformity are charge and development variations within a xerographic printing system; non-uniformities in polygon facet reflectivity, laser power degradation, loss of modulator efficiency and the like. Various techniques are known in the art for accomplishing some degree of compensation for these writing beam intensity variations. One technique incorporates the laser into a feedback loop and then electronically controls the excitation level. Another technique disclosed in US-A-4,400,740, describes a system for combining video image signals with beam intensity signals to provide an input to a modulator port which then regulates beam intensity. Still another technique is disclosed in US-A-4,727,382, where an intensity control device for a laser in a laser beam printer is described. The intensity control device stores a first representation of a present light intensity of the laser during its non-scanning mode and further stores a second representation of a user selected image density for a hard copy. See Col. 1, line 67-Col. 2, line 29. It is also known in the art to evaluate the laser source at the time of manufacture and to program, or "burn" in, a ROM to create a "smile" correction to the output signal to compensate for the particular frown output intensity variation. Another type of smile correction is disclosed in US-A-4,978,185. The technique disclosed therein, while providing adequate initial compensation, does not correct for the other non-uniformity factors described above which cause changes over time. While the laser source could have a new ROM burned in with a correction at a later time, this is an expensive solution and requires removal to a sub-assembly area. Still another type of smile correction is described in US-A-5,165,074. In this patent, a photoreceptor is exposed in a varying test pattern which is developed and transferred to an output print. The resulting print has a plurality of test pattern bands, each band being associated with a specific beam intensity correction signal. An optimum density band is identified and a corresponding digital beam intensity correction signal is applied to the laser.

Still another fast scan speed size correction is disclosed in co-pending prepublished EP-A-0 596 719 in which the correction is accomplished by modulating the pulse width of the drive signals applied to the laser beam source.

None of the above prior art solutions are directed towards correcting for fast scan-spot size variations in an overfilled system.

It is therefore an object of the invention to solve this problem.

According to the present invention as set out in claim 1 we provide a method of correcting for non-uniformities in a raster output scanner system comprising the steps of:
biasing a photosensitive medium to a predetermined xerographic bias level;
rotating a polygon having a plurality of mirrored facets;
radiating an intensity variable coherent, collimated light beam at a first exposure level along a first path;
illuminating both a first facet and a second facet of said plurality of mirrored facets with said collimated light beam so as to produce a reflect light beam from said first facet which has an intensity that is dependent upon an angle between said first path and said first facet (see EP-A-0 596 719) characterised by:
creating a latent image scan line having a width on said photosensitive medium by focusing the reflected light beam onto the medium to form a spot having a spot width which is scanned across said medium;
measuring the spot width at the first exposure level corresponding to said xerographic bias level, and
varying the exposure level as the spot is scanned such that the width of scan line is substantially constant.

More particularly, a fast scan calibration light modulated pattern is generated by a laser ROS system. The fast scan spot width is measured along a plurality of points along the scan line by CCD cameras or other beam width measurement devices. The illumination profile width for each beam at the xerographic (photoreceptor), bias exposure level is measured; the maximum beam width is determined and the exposure level at all of the points along the scan line is increased to make them equal to the maximum detected beam width.

The invention will now be described, by way of example, with reference to the accompanying drawings, in which:-

Figure 1 is a top view of an overfilled ROS printer design (prior art).

Figure 2 is a plot of scanning beam illumination level across a scan line on the surface of a photoreceptor showing a prior art smile correction which corrects for exposure level.

Figure 3 shows profiles of two superimposed beams measured in the fast scan direction with respect to xerographic bias (FWXB) level by CCD cameras in the image plane.

Figure 4 shows profiles of two superimposed beams measured in the fast scan direction with respect to the full width half max (FWHM) level.

Figure 5 shows the system of Figure 1 modified to operate in a fast scan spot width correction calibration mode.

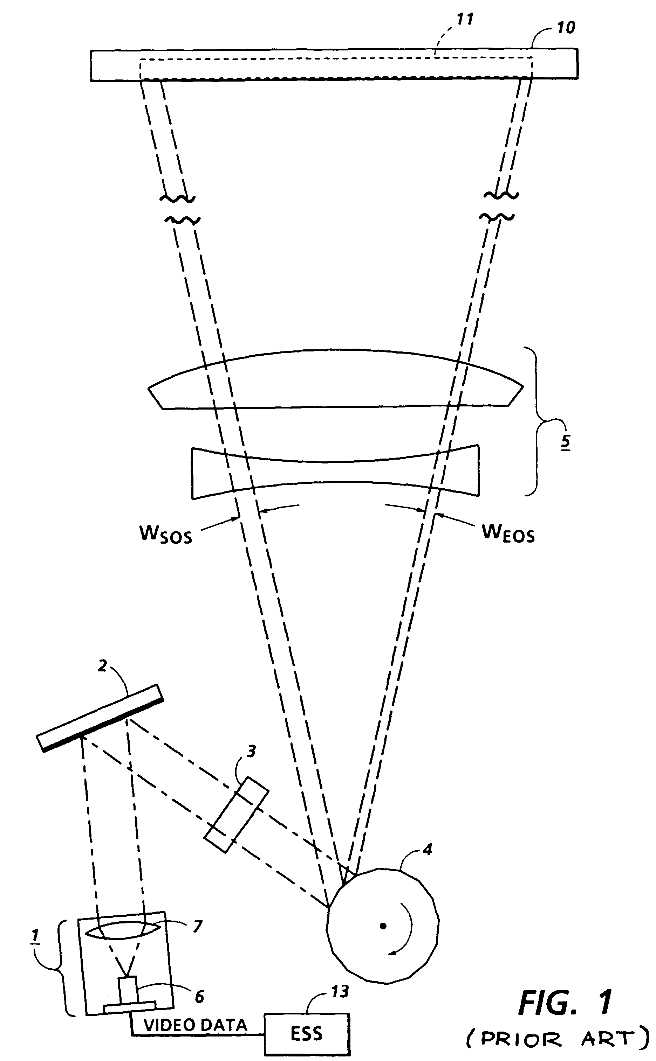

The spot size variation problem is first described with reference to Fig 1. Fig. 1 shows a prior art raster scanning system which includes beam generating means 1. Means 1 comprises a diode laser 6 and a collimating lens 7. Laser 6 is self-modulating, and the modulated output beam of light is in conformance with the information contained in a binary data image signal sent from an image processing unit in Electronic Sub System (ESS) 13. The image signals may originate from a memory disc, or a raster input scanner (RIS) or the like.

The modulated diverging output beam from laser 6 is collimated by lens 7 and deflected by mirror 2 (optional) into pre-polygon lens 3. Lens 3 is typically a cylindrical lens and serves to focus the beam to a controlled energy distribution onto the facets of polygon 4. Polygon 4 is designed to have a large number of facets consistent with an overfilled design architecture. As shown in Fig. 1, in the overfilled design architecture, the radiant energy beam at least partially illuminates more than one facet regardless of the rotational position of polygon 4. With the rotation of polygon 4 in the indicated direction, a light beam is reflected from polygon 4 facets and passes through post-polygon lens unit 5 which images the beam across the width of a charged photoreceptor 10, in a fast scan direction, as a scan line 11. Post-polygon imaging lens 5 may include a toroidal fθ imaging lens which performs wobble correction in the cross scan direction or a conventional fθ imaging lens and a cylinder mirror (not shown). Photoreceptor 10 is charged by means not shown to some charge bias level. For a DAD process (Discharged Area Development), the discharged area of the photoreceptor (those areas imaged by "on" time of the pixels), are later developed by developing means which applies toners so that the photoreceptor carries a visually perceptible image of the data which can then be transferred to the output medium. The photoreceptor charge is discharged (in a DAD system) over pixels in areas along the scan line where the laser is turned on. US-A-4,833,503, 4,611,901 and 4,791,452, disclose a conventional xerographic system which can be used to charge, develop and transfer a latent image formed on a photoreceptor. Conventional charge levels are approximately 800-900 volts; a photoreceptor (or xerographic) bias of about 200 volts is created by an electric field applied between the developer housing and the photoreceptor. This bias level is referred to as the xerographic bias level. The exposure required to discharge the photoreceptor from the initial charge level to the xerographic bias level is referred to as the xerographic bias exposure level.

As described above, one problem present in an overfilled polygon ROS is that the apparent width of the facet, and therefore the width of the beam in the fast scan direction as seen by the f-theta lens, changes along the scan line, as the polygon facet rotates from SOS to EOS; e.g. in Figure 1, W_{SOS} is not equal to W_{EOS} (W_{SOS} is wider). Since the facet defines the limiting aperture in the fast scan direction, the width of the spot at the photoreceptor is dependent on the apparent width of the facet. Because the apparent facet width is changing as the polygon rotates from SOS to EOS, the spot size at the photoreceptor plane, when measured at full width, half maximum, (FWHM) varies along the scan line. This variation in FWHM can be as much as 20%. It is inherent in the design architecture, and cannot be improved very much by the lens designer. This variation in the FWHM may make this choice of ROS architecture unacceptable for high quality ROS systems. The FWHM may also vary due to other factors in the system such as alignment tolerances, fabrication tolerances, and aberrations. The FWHM will be a maximum somewhere in the scan. In order to correct this problem in a xerographic system, and according to the principles of the present invention, the optical system is designed so that the largest FWHM along the scan line meets the fast scan FWHM specification, and a modification of the currently implemented smile correction (exposure uniformity) system in the ESS is used to maintain the spot size uniformity at the xerographic bias level as described below.

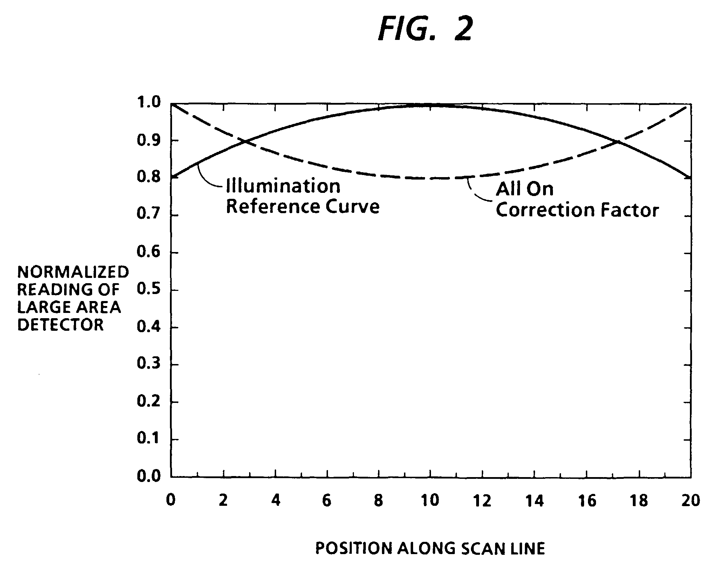

Smile correction is a well known technique used in polygon ROS systems to correct for aerial image illumination non-uniformity across the scan line. It is accomplished by "calibrating" the ROS by measuring the illumination level at several points (for example, 20) along the ROS scan line. Referring to Figure 2, these measurements are made with the laser 6 continuously "on" at a fixed output level, using a large area fast detector in the image plane. The illumination profile across the scan line 11 due to the continuously "on" laser is known as the "illumination reference curve". The minimum illumination level among the 20 points along the scan line is then determined. The reduction in illumination necessary to bring the illumination level down to this lowest level at each of the other 19 positions along the scan line is then calculated. These calculated reduction values are applied to correction circuitry in ESS 13 (Figure 1) which generates smile correction circuit signals to laser 6. The output of the laser at each of the remaining 19 sections of the scan line are reduced, in order to achieve uniform illumination along the scan line. A curve showing the reduction factors at each point along the scan, called the "all on" correction factor is also shown in Figure 2. This technique corrects for illumination uniformity variations along the scan line but does not compensate for non-uniformities in spot size across the scan line.

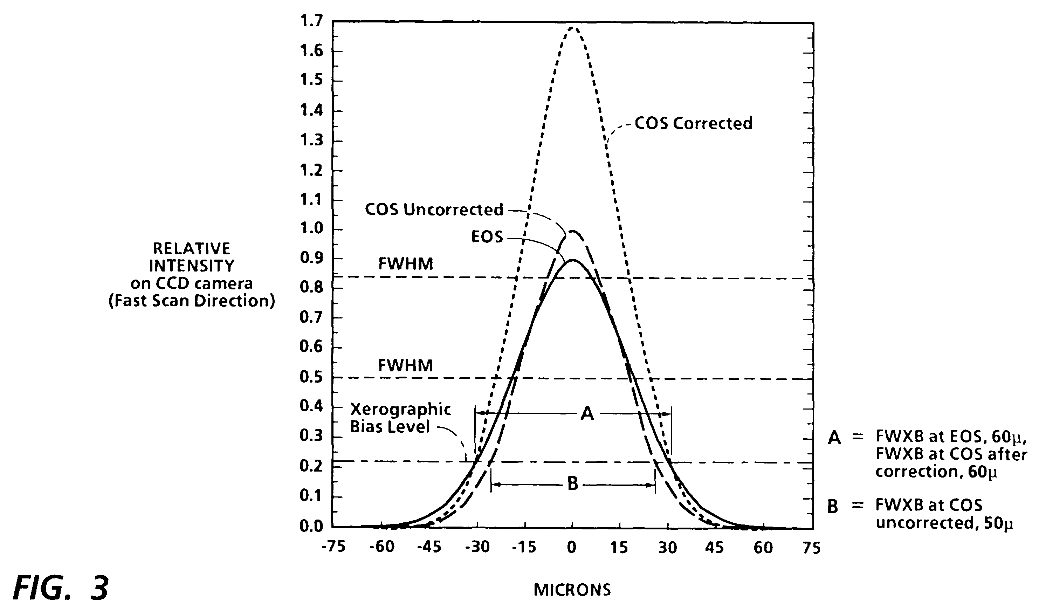

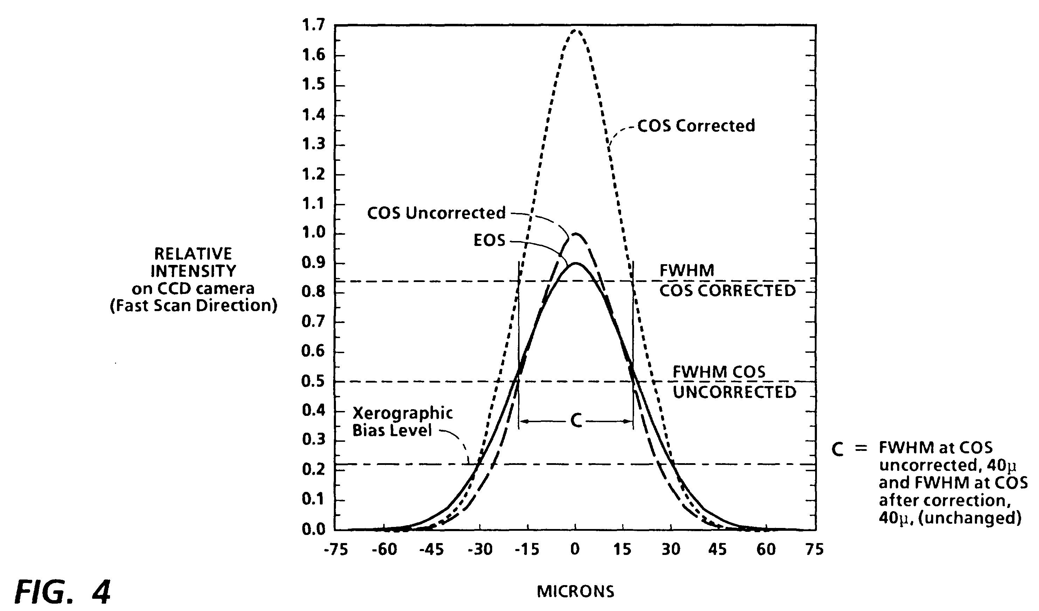

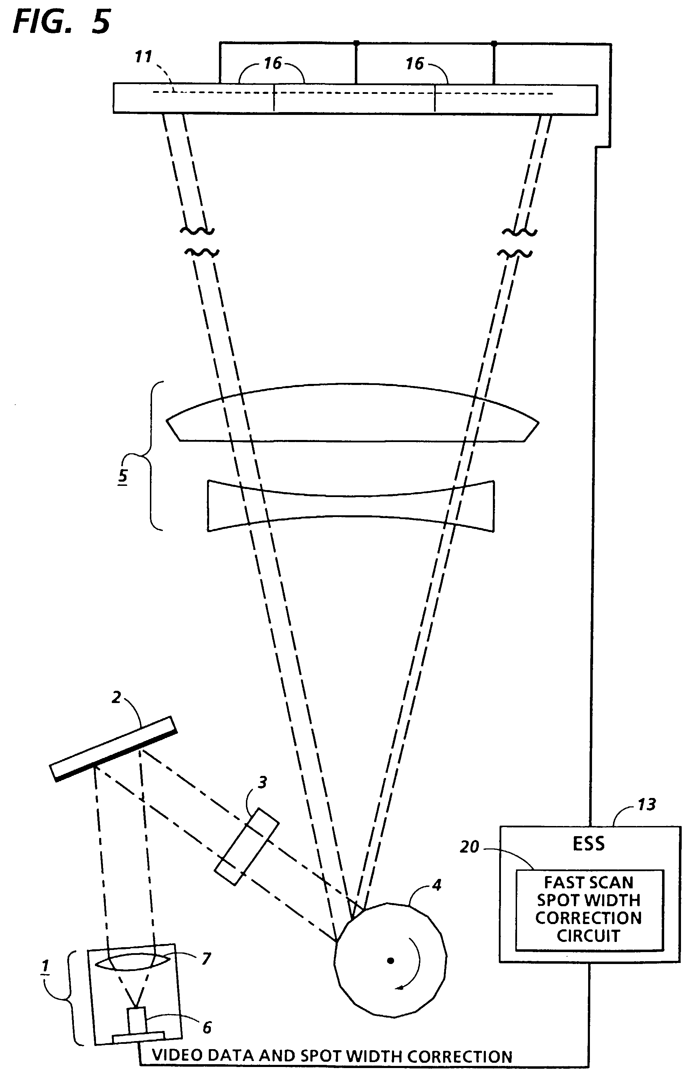

According to the present invention, the prior art smile correction technique is modified to correct for xerographic fast scan spot width variations along the scan line, instead of aerial image illumination non-uniformity variations. (These xerographic fast scan spot width variations may be caused by aerial image illumination non-uniformities.) This correction is accomplished by using a fast scan pattern consisting of "one-on, several off", for the calibration pattern, for a DAD xerographic system. (A "one off, several on" pattern would be used for a CAD xerographic system.) This "one on, several off" pattern will repeat every scan line. The "reference curve" for the "one on, several off" pattern is obtained by measuring the dynamic fast scan illumination profile of the pattern at several points along the scan line (for example, 20). For a specific example of a fast scan spot width correction 20, the ROS system shown in Figure 1 is placed in a calibration mode shown in Figure 5. In this mode, video data input is applied to the laser 6 which provides a laser output of "one pixel on, several pixels off". Several CCD cameras 16 are positioned in the image plane to measure relative spot size intensity, e.g. to provide a dynamic fast scan illumination profile at several points along the scan line. Figure 3 shows a typical profile of two superimposed beams, one at center of scan (COS) and another at end of scan (EOS) with beam widths measured in microns. A pixel profile can be conveniently measured with the one on, several off video data input. In a typical DAD Xerographic development system, only exposures above the xerographic bias level are developed. A typical bias level of 200 volts is represented in Figure 3 by a relative intensity level of 0.2 on the CCD camera. Thus, the spot width parameter relevant to the xerographic system is the full width of the spot in the fast scan direction at the xerographic bias level (referred to as FWXB) and not the more frequently referred to FWHM level. Note that the fast scan widths at the Xerographic bias level (FWXB) of the EOS profile and COS (uncorrected) profile (shown as widths A and B, respectively, are different; e.g. the uncorrected COS profile has a narrower width (50 microns) than the EOS profile (60 microns). This difference is typical of the situation encountered in an actual ROS. Referring to Figure 3, the fast scan width of the illumination profile at FWXB changes with illumination level because the xerographic bias level is a fixed level, determined by the photoreceptor sensitivity and the xerographic process control voltages, but independent of the peak value of the illumination profile. To illustrate the above description and again referring to Fig. 3, the beam width B at FWXB of the COS pixel profile (dashed line), uncorrected is some value (say 50 microns) while the beam width A of the COS corrected profile (dotted line) is greater (say 60 microns). Thus, the FWXB is seen to change from the uncorrected to the corrected profile as the peak value of the illumination profile is changed. Compare with Figure 4 which shows that the full width at half maximum (FWHM) of the COS (uncorrected) profile and the FWHM of the COS (corrected) profile have the same width C of 40 microns, which does not change with illumination level. This is because FWHM is measured relative to the peak of the illumination pattern. Thus, as the laser diode power is increased, the peak of the illumination profile will increase, but the FWHM remains constant. Using the above measurement technique, the fast scan illumination profile width at FWXB (rather than at FWHM) is determined, at each of the 20 points along the scan line. Outputs from cameras 16 are sent to a fast scan spot width correction circuit 20 (Figure 5) which replaces the prior art smile correction circuitry. At one of these 20 points along the scan line, Pmax, the full width at the Xerographic bias level of the illumination profile, FWXB, will be a maximum. The illumination level at each other point along the scan line is then increased to make the FWXB at each point along the scan equal to the FWXB at Pm. For the example given, the FWXB at EOS is assumed to be Pₘ. The illumination level for the exposure for the COS pixel profile is increased to that shown by the dotted line profile in Figure 3 (COS corrected) by the spot width correction circuit 20 which increases the output power of the light source. This increase in exposure results in increasing the FWXB of the COS profile to the same value as the FWXB of the EOS pixel shown; e.g., from 50 to 60 microns.

The illumination level increase along the scan line is effected by generating fast scan width correction signals which are applied to laser 6 to vary the laser output intensity.

## Claims

1. A method of correcting for non-uniformities in a raster output scanner system comprising the steps of:
biasing a photosensitive medium (16) to a predetermined xerographic bias level;
rotating a polygon (4) having a plurality of mirrored facets;
radiating an intensity variable coherent, collimated light beam at a first exposure level along a first path;
illuminating both a first facet and a second facet of said plurality of mirrored facets with said collimated light beam so as to produce a reflected light beam from said first facet which has an intensity that is dependent upon an angle between said first path and said first facet characterised by:
creating a latent image scan line (11) having a width on said photosensitive medium by focusing the reflected light beam onto the medium (16) to form a spot having a spot width which is scanned across said medium (16);
measuring the spot width at the first exposure level corresponding to said xerographic bias level; and
varying the exposure level as the spot is scanned such that the width of said scan line is substantially constant.

2. The method of claim 1 wherein the step of measuring the spot width includes the step of identifying a maximum spot width at the first exposure level corresponding to said xerographic bias level, and wherein the step of varying the exposure level includes the step of increasing the exposure level such that the width of said scan line is substantially the same as the width of said scan line produced by said identified maximum spot width.

3. The method of claim 1 wherein the system operates in DAD mode.

## Patentansprüche

1. Verfahren zum Korrigieren von Ungleichförmigkeiten in einem Rasterausgabeabtasteinrichtungssystem, das die Schritte aufweist:
Vorspannen eines photoempfindlichen Mediums (16) auf einen vorbestimmten, xerographischen Vorspannungspegel;
Drehen eines Polygons (4), das eine Vielzahl von verspiegelten Facetten besitzt;
Strahlen eines in der Intensität variablen, kohärenten, kollimierten Lichtstrahls bei einem ersten Beleuchtungspegel entlang einem ersten Pfad;
Beleuchten sowohl einer ersten Facette als auch einer zweiten Facette der Vielzahl verspiegelter Facetten mit dem kollimierten Lichtstrahl so, um einen reflektierten Lichtstrahl von der ersten Facette zu produzieren, der eine Intensität besitzt, die von einem Winkel zwischen dem ersten Pfad und der ersten Facette abhängig ist, gekennzeichnet durch Erzeugen einer Abtastlinie (11) eines latenten Bilds, die eine Breite auf dem photoempfindlichen Medium durch Fokussieren des reflektierten Lichtstrahls auf das Medium (16) hat, um einen Fleck zu bilden, der eine Fleckbreite besitzt, die über das Medium (16) abgetastet wird;
Messen der Fleckbreite an dem ersten Beleuchtungspegel entsprechend dem xerographischen Vorspannungspegel; und
Variieren des Beleuchtungspegels, wenn der Fleck abgetastet wird, derart, daß die Breite der Abtastlinie im wesentlichen konstant ist.

2. Verfahren nach Anspruch 1, wobei der Schritt eines Messens der Fleckbreite den Schritt eines Identifizierens einer maximalen Fleckbreite bei dem ersten Beleuchtungspegel entsprechend dem xerographischen Vorspannungspegel umfaßt und wobei der Schritt eines Variierens des Beleuchtungspegels den Schritt eines Erhöhens des Beleuchtungspegels umfaßt so, daß die Breite der Abtastlinie im wesentlichen dieselbe ist wie die Breite der Abtastlinie, die durch die identifizierte, maximale Fleckbreite produziert ist.

3. Verfahren nach Anspruch 1, wobei das System in einem DAD-Modus arbeitet.

## Revendications

1. Procédé de correction pour les non-uniformités dans un système de balayage tramé de sortie comprenant les étapes consistant à :
polariser un support photosensible (16) à un niveau de polarisation xérographique prédéterminé ;
pivoter un polygone (4) présentant une pluralité de facettes miroir ;
rayonner un faisceau lumineux collimaté cohérent d'intensité variable, à un premier niveau d'exposition, le long d'un premier trajet ;
éclairer à la fois une première et une deuxième facette de ladite pluralité de facettes miroir, avec ledit faisceau lumineux collimaté, de façon à produire un faisceau lumineux réfléchi à partir de ladite première facette qui présente une intensité qui dépend d'un angle entre ledit premier trajet et ladite première facette, caractérisé par :
la création d'une ligne de balayage d'image latente (11) présentant une largeur sur ledit support photosensible en focalisant le faisceau lumineux réfléchi sur le support (16) pour former un point présentant une largeur de point qui est balayée à travers ledit support (16) ;
la mesure de la largeur de point au premier niveau d'exposition correspondant audit niveau de polarisation xérographique, et
la variation du niveau d'exposition, à mesure que le point est balayé, de sorte que la largeur de la ligne de balayage est sensiblement constante.

2. Procédé selon la revendication 1, dans lequel l'étape consistant à mesurer la largeur de point inclut l'étape consistant à identifier une largeur de point maximum au premier niveau d'exposition correspondant audit niveau de polarisation xérographique, et dans lequel l'étape consistant à varier le niveau d'exposition inclut l'étape consistant à augmenter le niveau d'exposition d'une manière telle que la largeur de ladite ligne de balayage est sensiblement la même que la largeur de ladite ligne de balayage produite par ladite largeur de point maximum identifiée.

3. Procédé selon la revendication 1, dans lequel le système fonctionne en mode DAD.
